# EUROPÄISCHE PATENTSCHRIFT

(11) **EP 1 407 984 B1**
(45) Veröffentlichungstag und Bekanntmachung des Hinweises auf die Patenterteilung: **01.03.2006**
(21) Anmeldenummer: 03022344.0
(22) Anmeldetag: 04.10.2003
(51) Int. Cl.: B65G 1/04, B65G 47/91

(54) **Regallager mit Ziehregalen**
Shelf storage with movable racks
Magazin à rayonnage déplaçable

(30) Priorität: 09.10.2002 DE 20215479 U
(43) Veröffentlichungstag der Anmeldung: 14.04.2004
(60) Teilanmeldung: 05108897.9
(73) Patentinhaber: GEBR. WILLACH GmbH, D-53809 Ruppichteroth (DE)
(72) Erfinder: Willach, Ulrich, 53819 Neunkirchen-Seelscheid (DE); Schmitt, Werner, 53809 Ruppichteroth-Schönenberg (DE); Schumacher, Heribert, 53809 Ruppichteroth-Harth (DE)
(74) Vertreter: Selting, Günther

(56) Entgegenhaltungen:
- EP-A- 0 116 126
- EP-A- 0 924 144
- DE-A- 2 241 213
- DE-A- 3 435 679
- DE-A- 4 311 146

## Beschreibung

Die Erfindung betrifft ein Regallager mit Ziehregalen, die in einen Gang hinein bewegbar sind, in welchem eine einen Manipulator tragende Transportvorrichtung fährt, um aus den Regalfächern des Ziehregals Waren zu entnehmen bzw. die Regalfächer mit Waren zu befüllen.

In EP 0 734 975 B1 sowie in EP 0 924 144 A1 ist ein Regallager mit Ziehregalen beschrieben, bei dem die in dem Gang verfahrbare Transportvorrichtung einen Mast aufweist, dessen oberes Ende an einem Transportschlitten befestigt ist, von dem der Mast frei nach unten absteht. Das untere Ende des Masts ist ungeführt, weil eine untere Mastführung mit den Führungsschienen, auf denen die Ziehregale bewegbar sind, kollidieren würde. Wegen der einendigen Befestigung des Masts am Transportschlitten muss der Mast eine große Stabilität haben. Der Mast trägt einen vertikal verfahrbaren Vertikalschlitten, an dem der Manipulator auf einem Horizontalschlitten verfahrbar ist. Der Manipulatorarm kann rechts und links jeweils eine bestimmte Position auf dem Vertikalschlitten einnehmen, die einer Zielebene entspricht. Auf diese Zielebene wird das anzusteuernde Regalfach eingestellt, indem das Ziehregal so weit in den Gang hinein herausgezogen wird, dass sich das anzusteuernde Regalfach ebenfalls in der Zielebene befindet. Das Regallager ist derart automatisiert, dass sämtliche Bewegungen der Transportvorrichtung, des Manipulators und der Ziehregale von einer Steuereinrichtung gesteuert sind. Auf Anforderung einer bestimmten Ware greift der Manipulator automatisch auf dasjenige Regalfach zu, in dem diese Ware gespeichert ist. Er fährt dann eine Aufnahmevorrichtung an, an die er die entnommene Ware übergibt.

Derartige Regallager sind insbesondere als Apothekenlager zum Speichern von Medikamenten und anderen Apothekenprodukten geeignet. Generell sollte bei einem Regallager sichergestellt sein, dass auch im Falle eines Ausfalls bestimmter Komponenten oder eines Stromausfalls die Regalfächer zugänglich sind, so dass im Notfall eine manuelle Entnahme der Waren möglich ist, wenn aus irgendeinem Grund die automatische Funktion des Regallagers ausfällt oder gestört ist. Bei dem bekannten Regallager befindet sich der Mast in der Mitte des Ganges, so dass er bei einem manuellen Betrieb des Lagers den Gang versperrt. Der Mast kann in eine Parkposition außerhalb des Bereichs der Ziehregale gebracht werden, beispielsweise durch manuelles Verschieben oder mit Hilfe einer Notkurbel. Eine solche Parkposition setzt jedoch voraus, dass ein Leerraum vorhanden ist, der beim normalen Betrieb des Regallagers nicht benötigt wird.

Der Erfindung liegt die Aufgabe zugrunde, ein Regallager mit Ziehregalen zu schaffen, bei dem die Transportvorrichtung keine zusätzliche Parkposition benötigt und dennoch den Durchgang durch den Gang nicht versperrt.

Die Lösung dieser Aufgabe erfolgt erfindungsgemäß mit den im Anspruch 1 angegebenen Merkmalen. Hiernach weist die Vertikalführung des Vertikalschlittens mindestens zwei an den Rändern des Ganges angeordnete Säulen auf, zwischen denen sich ein Durchgang befindet, und der Vertikalschlitten ist entlang der Säulen beidendig geführt.

Anstelle eines zentralen Mastes, der im Gang bewegt wird, weist die Vertikalführung der Transportvorrichtung zwei seitliche Säulen auf. Die Vertikalführung bildet mit dem Transportschlitten einen Rahmen, der einen Durchgang bildet. Wenn der Transportschlitten am oberen Ende angeordnet ist, bildet der Rahmen eine Art Portal, in welchem der Vertikalschlitten in der Höhe ververfahrbar ist. Im Falle einer Störung kann der Transportschlitten mit der Vertikalführung an jeder beliebigen Stelle des Ganges stehen bleiben, wo das Herausziehen des gewünschten Ziehregals nicht beeinträchtigt wird. Für kleine Verschiebungen der Transportvorrichtung kann eine Handkurbel oder ein ähnliches Hilfsmittel vorgesehen sein. Die Transportvorrichtung bleibt jedoch im Gang stehen und kann von dem Bedienungspersonal durchschritten werden. Damit der Vertikalschlitten den Durchgang nicht versperrt, kann er ebenfalls mit einer Handkurbel oder einem ähnlichen Hilfsmittel in seine obere Endstellung hochgefahren werden. Das Vorhandensein von zwei Säulen an der Vertikalführung hat den Vorteil, dass die nur an einem Ende gehaltene Vertikalführung die erforderliche Stabilität aufweist, um den Manipulator mit hoher Genauigkeit in Bezug auf die Position der Regalfächer zu führen.

Generell besteht die Möglichkeit, den Transportschlitten am oberen oder am unteren Ende der Transportvorrichtung vorzusehen. Jedenfalls muss er an demjenigen Ende angeordnet sein, das den Führungsschienen der Ziehregale abgewandt ist, damit die Führungen von Transportvorrichtung und Ziehregalen, die sich rechtwinklig schneiden, nicht miteinander kollidieren. Zur Erhöhung der Stabilität der Vertikalführung können die Enden der Säulen durch eine Querstrebe verbunden sein. Eine solche Querstrebe behindert nicht wesentlich den Durchgang für das Personal, wenn sie am unteren Ende der Säulen angeordnet ist.

Die Vertikalführung kann ein Gestell aus vier Säulen aufweisen, an denen der Vertikalschlitten geführt ist. Auch hierdurch wird die Steifigkeit der einendig aufgehängten Vertikalführung erhöht.

Der Vertikalschlitten bildet einen Querbalken, der höhenverfahrbar zwischen den Säulen angeordnet ist. Auf ihm kann der Manipulator über die gesamte Breite von Säule zu Säule verfahren werden, ohne ein Hindernis passieren zu müssen. Vorteilhafterweise ist der Manipulator auf dem Vertikalschlitten um eine vertikale Achse drehbar, um einen Warenträger entweder in die Zugriffsrichtung oder in die Abgaberichtung zu bringen. Während bei dem bekannten Regallager das Schwenken des Manipulators um eine horizontale Achse erforderlich ist, damit der Manipulator den Mast passieren kann, ist bei der vorliegenden Erfindung eine Verschwenkung des Manipulators um eine vertikale Achse möglich.

Die Aufnahmevorrichtung, an die der Manipulator Gegenstände übergibt, ist vorzugsweise in Verlängerung des Ganges in einer Höhe im oberen Bereich des Weges des Vertikalschlittens angeordnet. Bei dem bekannten Regallager befindet sich die Aufnahmevorrichtung am Boden in Verlängerung des Ganges. Dies hat zur Folge, dass sie das Begehen des Ganges behindert und dass ein Warenübergaberegal, das in der Zugriffsposition in Verlängerung des Ganges positioniert wird, den Zugang der Aufnahmevorrichtung für den Manipulator versperrt. Infolgedessen kann das Warenübergaberegal nur in den Zeiten, in denen keine Warenentnahme aus dem Regallager erfolgt, vor den Gang gefahren werden, damit der Manipulator Waren aus dem Warenübergaberegal entnimmt und in die Regalfächer verbringt. Die manuelle Bestückung des Warenübergaberegals erfolgt in einer Position, bei der das Warenübergaberegal aus der Reihe der Ziehregale nach außen hin verlagert ist, von der selben Seite her, auf die später der Manipulator zugreift. Durch diese Konzeption wird der Platzbedarf seitlich der Reihe von Ziehregalen erhöht.

Erfindungsgemäß ist ferner vorgesehen, dass ein Warenübergaberegal, dass mindestens zeitweise in Verlängerung des Ganges positionierbar ist, auf der dem Gang abgewandten Seite als Eingabeseite und auf der dem Gang zugewandten Seite als Ausgabeseite ausgebildet ist. Als Folge hiervon kann das Warenübergaberegal in der vor dem Gang stehenden Position sowohl manuell bestückt als auch vom Manipulator entleert werden. In Kombination mit der höher als das Warenübergaberegal angeordneten Aufnahmevorrichtung ist es möglich, die Waren von dem Manipulator über das Warenübergaberegal hinweg an die Aufnahmevorrichtung abzugeben. Dies hat zur Folge, dass das Warenübergaberegal während der Warenausgabe aus dem Regallager vor dem Gang verbleiben kann und die Funktion des Manipulators nicht beeinträchtigt. Im Störungsfall kann das Warenübergaberegal in eine seitliche Position in Verlängerung einer Reihe von Ziehregalen manuell, z.B. durch einen Kurbelantrieb, verschoben werden, um den Gang zugänglich zu machen. Daher ist eine Abstellposition für das Warenübergaberegal in Verlängerung der Reihe von Ziehregalen vorgesehen.

Da das Warenübergaberegal eine Eingabeseite und eine Ausgabeseite hat, sollten Sicherungsvorkehrungen getroffen werden, die verhindern, dass beide dieser Seiten gleichzeitig offen sind. Gemäß einer bevorzugten Weiterbildung der Erfindung weist das Warenübergaberegal eine Jalousie auf, die in einer ersten Position die Eingabeseite verschließt und in einer zweiten Position die Ausgabeseite verschließt. Dadurch werden mit einer einzigen Jalousie beide Funktionen erfüllt. Es wird beispielsweise verhindert, dass eine Hand, die von der Eingabeseite her eingeführt wird, mit dem Manipulator in Berührung kommt, der von der Ausgabeseite her zeitgleich eingeführt wird.

Im Folgenden wird unter Bezugnahme der Zeichnungen ein Ausführungsbeispiel der Erfindung näher erläutert.

Es zeigen:
- Fig. 1:: eine schematische Stirnansicht des Regallagers mit Blickrichtung in den Gang hinein,
- Fig. 2:: eine schematische Draufsicht des Regallagers,

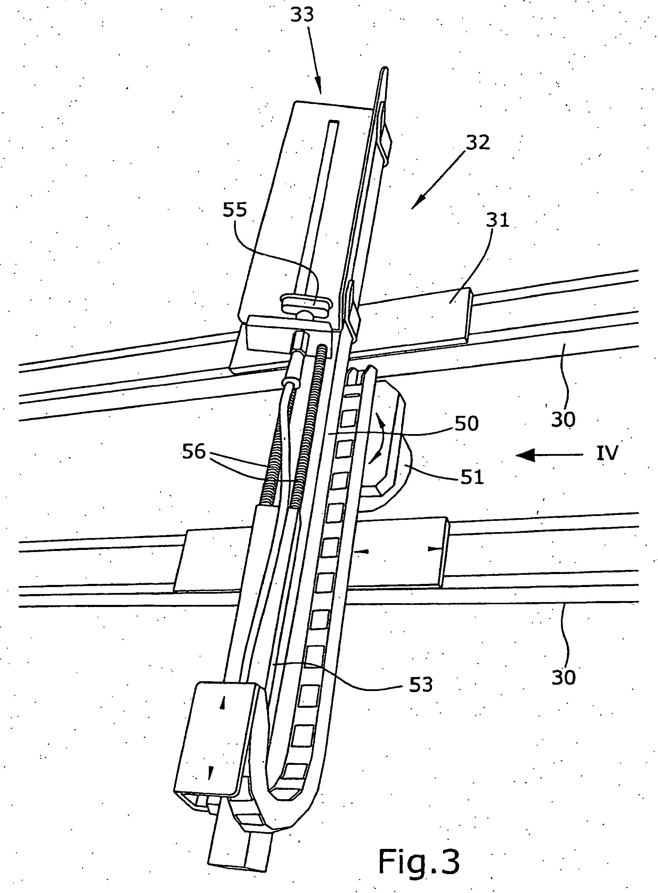

- Fig. 3:: eine perspektivische Darstellung des Manipulators aus Richtung des Pfeils III von Figur 1,
- Fig. 4:: eine Seitenansicht des Manipulators aus Richtung des Pfeils IV von Figur 3 in der Grundstellung,
- Fig. 5:: den Manipulator, der in ein Regalfach hineinfährt,
- Fig. 6:: das Ergreifen der Ware durch den Sauggreifer nach dem Vorschieben gegen die Rückwand des Regalfachs, und
- Fig. 7:: das Herausziehen der Ware auf den Warenträger durch den Sauggreifer.

Das Regallager, das im vorliegenden Fall ein Apothekenlager ist, weist ein Traggestell 10 auf, in dem sämtliche Komponenten angeordnet sind. In dem Traggestell 10 befinden sich Ziehregäle 11, die auf Rollen 12 in Führungsschienen 13 verfahrbar sind. Zu beiden Seiten eines Ganges 14 ist jeweils eine Reihe von Ziehregalen vorhanden. Jedes dieser Ziehregale 11 kann aus seiner Reihe heraus in den Gang 14 hineingezogen werden. Zu den Einzelheiten des Aufbaus des Ziehregallagers wird auf EP 0 734 975 B1 verwiesen.

Die Ziehregale 11 enthalten im vorliegenden Fall Regalfächer 15, die nicht durch Querwände gegeneinander abgegrenzt sind. Jedes Regalfach 15 weist einen schrägen Boden 16 und eine rechtwinklig hierzu verlaufende Seitenwand 17 auf, so dass die Ware 18 in definierter Form in dem gebildeten Winkel aufgenommen wird, wobei die größte Ware mit 18 und die kleinste Ware mit 18a bezeichnet ist. Das Ziehregal 11 hat also sägezahnförmige Regalböden.

In Längsrichtung des Ganges 14 ist die Transportvorrichtung 20 verfahrbar. Diese weist einen Transportschlitten 21 auf, der an Schienen 22 des Traggestells 10 geführt und oberhalb der Ziehregale 11 angeordnet ist. Über dem Transportschlitten 21 verläuft eine am Traggestell 10 befestigte Führungsschiene 23, an deren entgegengesetzten Außenseiten Führungsrollen 24 des Transportschlittens 21 angreifen, um eine Seitenführung des Transportschlittens 21 zu bewirken.

Von dem Transportschlitten 21 ragt eine Vertikalführung 25 nach unten. Diese besteht aus einem Paar paralleler linker Säulen 26 und einem Paar paralleler rechter Säulen 27. Die Säulen jedes Paares sind in Längsrichtung des Ganges hintereinander angeordnet. Die Säulen 26 und 27 sind an ihren unteren Enden durch eine Querstrebe 28 verbunden. Die Vertikalführung 25 bildet einen in sich starren Rahmen, der nur am oberen Ende aufgehängt ist, während das untere Ende keine Führungen aufweist, die mit den Führungen der Ziehregale 11 kollidieren würden.

Zwischen den Säulen 26 und 27 erstreckt sich ein Vertikalschlitten 30, der in vertikaler Richtung gesteuert verfahrbar ist. Der Antrieb des Vertikalschlittens 30 erfolgt durch (nicht dargestellte) Spindeln, die in oder neben den Säulen 26,27 angeordnet sind und synchron angetrieben werden. Die Säulen 26 und 27 befinden sich unmittelbar angrenzend an die Reihe von Ziehregalen, also an den äußersten Enden der Breite des Ganges 14. Wenn der Vertikalschlitten 30 in seine oberste Position gefahren wird, ist der Gang 14 zwischen den Säulen 26 und 27 als Durchgang für Personen frei.

Der Vertikalschlitten 30 bildet eine Führung für einen Horizontalschlitten 31, der quer zum Gang 14 auf dem Vertikalschlitten 30 verfahrbar ist. Der Horizontalschlitten 31 trägt einen Manipulator 32, der einen in Längsrichtung des Ganges ausgerichteten Warenträger 33 enthält.

Beim Betrieb wird der Horizontalschlitten 31 in eine bestimmte Horizontalposition gefahren, die der vertikalen Zielebene entspricht. Das Ziehregal 11 wird so weit in den Gang hinein gefahren, dass das anzusteuernde Regalfach 15 sich ebenfalls in der vertikalen Zielebene im Gang befindet. Der Vertikalschlitten 30 wird vertikal verfahren, bis der Warenträger 33 die Höhe des Regalfachs 15 erreicht hat.

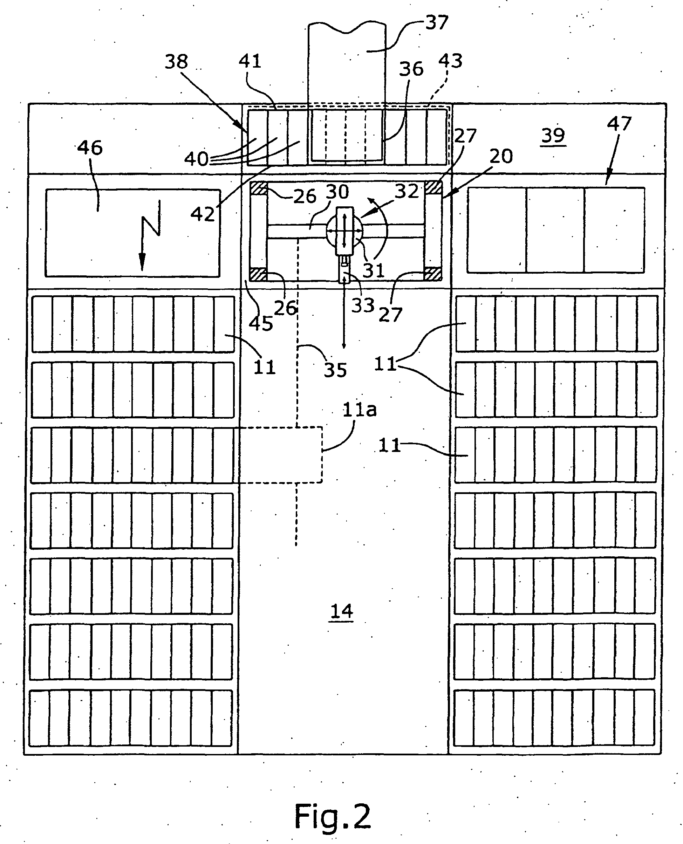

In Figur 2 ist die vertikale Zielebene 35 dargestellt, in die der Manipulator 32 auf dem Vertikalschlitten 30 verfahren wird. Das Ziehregal 11a, auf das zugegriffen werden soll, ist so weit herausgezogen, dass das betreffende Regalfach sich in der Zielebene 35 befindet. Der Warenträger 33 übernimmt die Ware in noch zu erläuternder Weise aus dem Regalfach. Dann fährt der Manipulator eine Aufnahmevorrichtung 36 an, an die die Ware übergeben wird. Von der Aufnahmevorrichtung 36 wird die Ware durch ein Transportband 37 abgeführt.

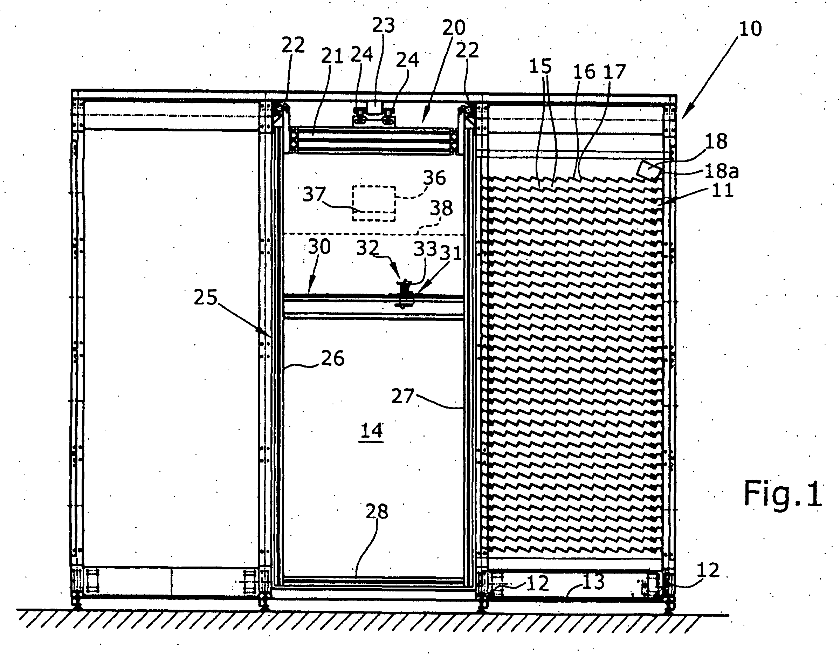

Gemäß Figuren 1 und 2 befindet sich die Aufnahmevorrichtung 36 über einem Warenübergaberegal 38, das in einer Verlängerung des Ganges 14 angeordnet ist und seitlich in eine Abstellposition 39 verfahren werden kann, in der es die Verlängerung des Ganges freigibt. In Figur 2 ist die Transportvorrichtung 20 in der Übergabeposition dargestellt, in der der Manipulator 32 die Aufnahmevorrichtung 36 erreichen kann, um die Ware an diese zu übergeben. Diese Übergabeposition befindet sich zwischen dem Ende des Ganges 14 und dem Warenübergaberegal 38. In der Übergabeposition kann der Manipulator 32 auch auf die einzelnen Fächer 40 des Warenübergaberegals 38 zugreifen. Das Warenübergaberegal 38 hat eine Eingabeseite 41, an der Waren manuell eingeführt werden können, und eine Ausgabeseite 42, in die der Manipulator 32 gesteuert eingreifen kann.

Das Warenübergaberegal 38 ist mit einer Jalousie 43 versehen, die horizontal verschoben werden kann und so geführt ist, dass sie entweder die Eingabeseite 41 oder die Ausgabeseite 42 verschließt. Somit ist ein direkter Durchgriff durch ein Regalfach 40 nicht möglich. Es wird insbesondere verhindert, dass eine. Person, die mit einer Hand in die Eingabeseite 41 eingreift, durch den Manipulator verletzt wird.

Seitlich neben der Übergabeposition 45 der Transportvorrichtung 20 befindet sich in Verlängerung einer, Ziehregalreihe ein Schaltschrank 46 und in Verlängerung einer anderen Ziehregalreihe ein Lagerraum 47 für Waren, die noch eingegeben werden müssen oder aussortiert wurden.

Bei Benutzung des Warenübergaberegals 38 werden Waren in definierte Regalfächer 40 manuell eingelegt. Der Manipulator 32 fährt das betreffende Regalfach an, übernimmt die Ware aus diesem und führt sie in das Regalfach eines Ziehregals ein. Sämtliche Vorgänge werden gesteuert ausgeführt und gespeichert. Der Lagercomputer weiß dann, in welchem Regalfach welches Ziehregals sich eine bestimmte Ware befindet.

Im Störungsfall können aus dem Lager Waren manuell entnommen werden. Das Warenübergaberegal 38 wird in die Abstellposition 39 geschoben, so dass durch die Transportvorrichtung 20 hindurch der Weg in den Gang 14 frei ist. Die Transportvorrichtung 20 kann manuell verschoben werden. Auch der Vertikalschlitten 30 kann manuell hochgekurbelt werden. Das betreffende Ziehregal 11 kann manuell herausgezogen werden und die Ware kann aus ihm entnommen werden. Bei neuerlicher Inbetriebnahme des Automatikbetriebes fahren sämtliche Komponenten in eine definierte Ausgangslage zurück, bevor der erste Auftrag ausgeführt wird.

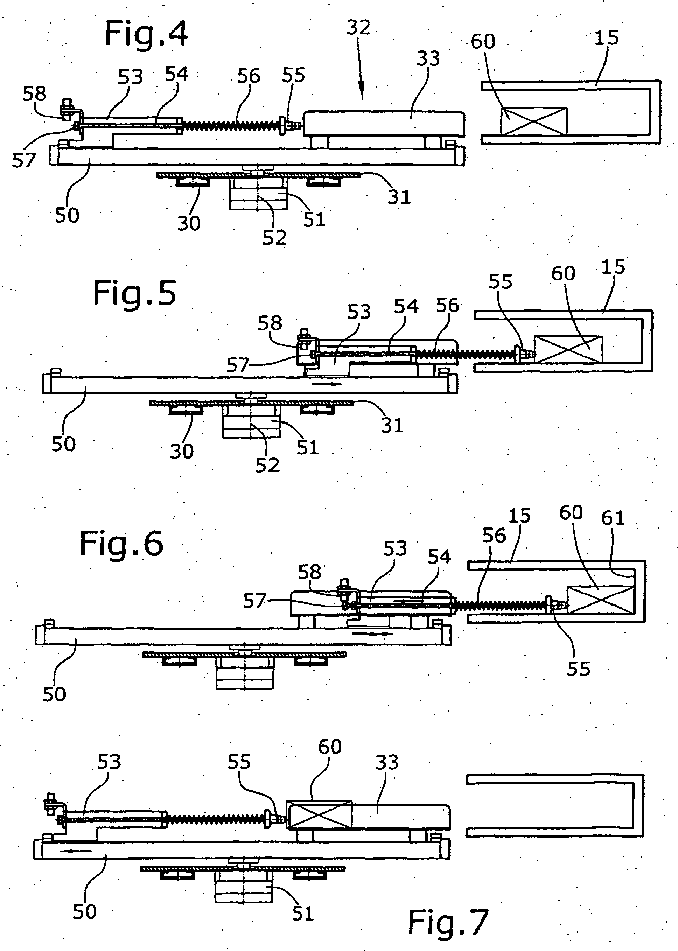

In den Figuren 4 - 7 ist die Funktion des Manipulators 32 dargestellt. Auf dem Horizontalschlitten 31, der auf dem Vertikalschlitten 30 horizontal gesteuert verfahrbar ist, befindet sich ein horizontaler Balken 50 als Basisteil des Manipulators. Der Balken 50 ist durch einen Drehantrieb 51 relativ zu dem Horizontalschlitten 31 um eine vertikale Achse 52 schwenkbar, so dass er die in den Zeichnungen dargestellte Zugriffsposition einnehmen kann, in der er auf das Regalfach 15 gerichtet ist, oder eine Abgabeposition, in der er um 180° gedreht ist und in der der Warenträger 33 von dem Regalfach 15 wegweist. Der Warenträger 33 ist auf dem Balken 50 fest angebracht. Er besteht aus einem winkelförmigen Blech, das entsprechend der Form des Regalfachs 15 gestaltet ist und vor diesem Regalfach positioniert werden kann. Auf dem Balken 50 ist ein Mitnehmer 53 in Längsrichtung verfahrbar. Der Balken ist hierzu als kolbenloser Pneumatikzylinder ausgebildet, um den Mitnehmer 53 zu bewegen. Der Mitnehmer 53 trägt eine Stangenvorrichtung 54 aus zwei parallelen Stangen, die in dem Mitnehmer verschiebbar sind. An den vorderen Enden der Stangen ist mindestens ein Sauggreifer 55 befestigt. Eine Federvorrichtung 56 treibt den Sauggreifer 55 mit der Stange 54 in die vordere Endstellung. Diese ist dadurch begrenzt, dass ein Anschlagteil 57 am rückwärtigen Ende der Stangenvorrichtung 54 gegen den Mitnehmer 53 stößt. Das Anschlagteil 57 bildet zugleich ein Markierungsteil für einen an dem Mitnehmer 53 befestigten Sensor 58. Dieser stellt fest, wenn das Anschlagteil 57 seine vordere Endstellung verlässt und zurückbewegt wird.

In der in Figur 4 dargestellten Grundstellung befindet sich der Mitnehmer 53 in der Rückzugsposition und die Stangenvorrichtung 54 mit dem Sauggreifer 55 ist aus dem Mitnehmer durch die Federvorrichtung 56 herausgedrückt. Der Warenträger 33 ist vor einem Regalfach 15, das eine Ware 60 enthält, positioniert.

Gemäß Figur 5 wird zum Zugreifen auf die Ware 60 der Mitnehmer 53 auf dem Balken 50 vorgeschoben, wobei der Sauggreifer 55 ge- , gen die Ware 60 stößt und diese vor sich herschiebt, ohne dass die Federvorrichtung 56 zusammengedrückt wird.

Figur 6 zeigt den Zustand; dass die Ware 60 gegen ein Hindernis stößt, im vorliegenden Fall gegen die Rückwand 61 des Regalfachs 15. Dadurch wird die Stangenvorrichtung 54 relativ zu dem Mitnehmer 53 nach hinten verschoben und die Federvorrichtung 56 zusammengedrückt. Das Anschlagteil 57 am rückwärtigen Ende der Stangenvorrichtung 54 betätigt den Sensor 58. Daraufhin wird der Sauggreifer 55 eingeschaltet und dieser saugt sich an der Ware 60 fest. Dabei ist sichergestellt, dass ein gewisser mechanischer Anpressdruck durch die Federvorrichtung 56 herrscht, so dass der Sauggreifer 55 voll wirksam werden kann.

Schließlich wird gemäß Figur 7 der Mitnehmer 53 auf dem Balken 50 zurückgezogen, während der Sauggreifer 55 aktiviert bleibt. Dadurch wird die Ware 60 auf den Warenträger 33 gezogen. Nun wird der Horizontalschlitten 31 in die Mittenposition verfahren. Danach wird der Drehantrieb 51 betätigt, um den Balken 50 um 180° in die Abgabeposition zu schwenken. Der Vertikalschlitten 30 wird auf die Höhe der Aufnahmevorrichtung 36 hochgefahren und gleichzeitig wird der Horizontalschlitten 31 in die für die Warenabgabe erforderliche Querposition gefahren. Wenn die Aufnahmevorrichtung 36 erreicht ist, schiebt der Mitnehmer 53 die Ware 60 von dem Warenträger 33 herunter, ohne dass der Sauggreifer 55 aktiviert ist.

## Patentansprüche

1. Regallager mit Ziehregalen, die in einen Gang (14) hinein bewegbar sind, in welchem eine einen Manipulator (32) tragende Transportvorrichtung (20) fährt, wobei die Transportvorrichtung (20) einen längs des Ganges (14) geführten Transportschlitten (21) aufweist, von dem eine Vertikalführung (25) für einen Vertikalschlitten (30) frei absteht,
**dadurch gekennzeichnet,**
**dass** die Vertikalführung (25) mindestens zwei seitlich angeordnete Säulen (26,27) aufweist, zwischen denen sich ein Durchgang befindet und dass der Vertikalschlitten (30) entlang der Säulen (26,27) beidendig geführt ist.

2. Regallager nach Anspruch 1, **dadurch gekennzeichnet, dass** die Säulen (26,27) an ihren freien Enden durch eine Querstrebe (28) verbunden sind.

3. Regallager nach Anspruch 1 oder 2, **dadurch gekennzeichnet, dass** die Vertikalführung (25) ein Gestell aus vier Säulen (26,27) aufweist, an denen der vertikalschlitten (30) geführt ist.

4. Regallager nach einem der Ansprüche 1 - 3, **dadurch gekennzeichnet, dass** der Manipulator (32) auf dem Vertikalschlitten (30) um eine vertikale Achse (52) drehbar ist, um einen Warenträger (33) entweder in die Zugriffsrichtung oder in die Abgaberichtung zu bringen.

5. Regallager nach einem der Ansprüche 1 - 4, **dadurch gekennzeichnet, dass** die Säulen (26,27) synchron angetriebene Spindeln für den Antrieb des Vertikalschlittens (30) aufweisen.

6. Regallager nach einem der Ansprüche 1 - 5, **dadurch gekennzeichnet, dass** eine Aufnahmevorrichtung (36), an die der Manipulator (32) Waren übergibt, in Verlängerung des Ganges (14) in einer Höhe im oberen Bereich des Weges des Vertikalschlittens (30) angeordnet ist.

7. Regallager nach einem der Ansprüche 1 - 6, **dadurch gekennzeichnet, dass** ein Warenübergaberegal (38), das mindestens zeitweise in Verlängerung des Ganges (14) positionierbar ist, auf der dem Gang (14) abgewandten Seite als Eingabeseite (41) und auf der dem Gang zugewandten Seite als Ausgabeseite (42) ausgebildet ist.

8. Regallager nach Anspruch 7, **dadurch gekennzeichnet, dass** zwischen dem Ende des Ganges (14) und dem Warenübergaberegal (38) eine Übergabeposition (45) für die Transportvorrichtung (20) vorgesehen ist.

9. Regallager nach Anspruch 7 oder 8, **dadurch gekennzeichnet, dass** eine Abstellposition (39) für das Warenübergaberegal (38) in Verlängerung einer Reihe von Ziehregalen (11) vorgesehen ist.

10. Regallager nach einem der Ansprüche 7 - 9, **dadurch gekennzeichnet, dass** das Warenübergaberegal (38) eine Jalousie (43) aufweist, die in einer ersten Position die Eingabeseite (41) verschließt und in einer zweiten Position die Ausgabeseite (42) verschließt.

11. Regallager nach den Ansprüchen 6 und 7, **dadurch gekennzeichnet, dass** die Aufnahmevorrichtung (36) über der Betriebsposition des Warenübergaberegals (38) angeordnet ist, derart, dass der Manipulator (32) die Waren (60) bei hochgefahrenem Vertikalschlitten (30) über dem Warenübergaberegal (38) in die Aufnahmevorrichtung (36) entlässt.

## Claims

1. A shelf storage with pull-out shelves adapted to be moved into a passage (14) in which a transport device (20) carrying a manipulator (32) runs, the transport device (20) comprising a transport carriage (21) guided along the passage (14), from which transport carriage a vertical guide (25) for a vertical carriage (30) is cantilevered,
**characterized in**
**that** the vertical guide (25) comprises at least two columns (26, 27) arranged on the sides, between which a passage exists, and that the vertical carriage (30) is guided at its both ends along the columns (26, 27).

2. The shelf storage of claim 1, wherein the free ends of the columns (26, 27) are connected by a crossbeam (28).

3. The shelf storage of claim 1 or 2, wherein the vertical guide (25) comprises a frame of four columns (26, 27) along which the vertical carriage (30) is guided.

4. The shelf storage of one of claims 1 - 3, wherein the manipulator (32) is rotatable around a vertical axis (52) on the vertical carriage (30) for either moving an article carrier (33) in the direction of access or in the dispensing direction.

5. The shelf storage of one of claims 1 - 4, wherein the columns (26, 27) comprise synchronously driven spindles for driving the vertical carriage (30).

6. The shelf storage of one of claims 1 - 5, wherein a receiving device (36), to which the manipulator (32) transfers articles, is arranged as an extension of the passage (14) on a level in the upper portion of the path of the vertical carriage (30).

7. The shelf storage of one of claims 1 - 6, wherein an article transfer shelf (38) adapted to be at least temporarily positioned as an extension of the passage (14) is provided as the input side (41) on the side averted from the passage (14) and as the dispensing side (42) on the side facing the passage (14).

8. The shelf storage of claim 7, wherein a transfer position (45) for the transport device (20) is provided between the end of the passage (14) and the article transfer shelf (38).

9. The shelf storage of claim 7 or 8, wherein a parking position (39) for the article transfer shelf (38) is provided in prolongation of a row of pull-out shelves (11).

10. The shelf storage of one of claims 7 - 9, wherein the article transfer shelf (38) comprises a shutter (43) which in a first position closes the input side (41) and in a second position closes the dispensing side (42).

11. The shelf storage of claims 6 and 7, wherein the receiving device (36) is arranged above the operative position of the article transfer shelf (38) such that, when the vertical carriage (30) is moved up, the manipulator (32) releases the articles (60) into the receiving device (36) above the article transfer shelf (38).

## Revendications

1. Magasin à rayonnages mobiles pouvant être déplacé dans une allée de desserte (14) dans laquelle circule un dispositif de transport (20) portant un manipulateur (32), le dispositif de transport (20) présentant un chariot de transport (21) guidé le long de l'allée de desserte (14) et duquel s'éloigne librement un guidage vertical (25) pour un chariot vertical (30)
**caractérisé en ce que**
le guidage vertical (25) présente au moins deux montants (26, 27) disposés latéralement et entre lesquels se trouve un passage et le chariot vertical (30) est guidé des deux côtés le long des montants (26, 27).

2. Magasin selon la revendication 1, **caractérisé en ce que** les montants (26, 27) sont reliés à leurs extrémités libres par une entretoise (28).

3. Magasin selon la revendication 1 ou 2, **caractérisé en ce que** le guidage vertical (25) présente une structure composée de quatre montants (26, 27) sur lesquels est guidé le chariot vertical (30).

4. Magasin selon l'une quelconque des revendications 1 à 3, **caractérisé en ce que** le manipulateur (32) peut tourner sur le chariot vertical (30) autour d'un axe vertical (52) afin d'amener un porte-marchandises (33) soit dans la direction d'accès soit dans la direction de distribution.

5. Magasin selon l'une quelconque des revendications 1 à 4, **caractérisé en ce que** les montants (26, 27) présentent des broches entraînées de manière synchrone pour l'entraînement du chariot vertical (30).

6. Magasin selon l'une quelconque des revendications 1 à 5, **caractérisé en ce que** le dispositif de réception (36) auquel le manipulateur (32) délivre les objets est disposé dans le prolongement de l'allée de desserte (14) à une hauteur dans la zone supérieure du parcours du chariot vertical (30).

7. Magasin selon l'une quelconque des revendications 1 à 6, **caractérisé en ce qu'**un rayonnage de livraison des marchandises (38) qui peut être positionné au moins parfois dans le prolongement de l'allée de desserte (14) est conçu sur le côté opposé à l'allée de desserte (14) en tant que côté d'entrée (41) et sur le côté tourné vers l'allée de desserte (14) en tant que côté de sortie (42).

8. Magasin selon la revendication 7 **caractérisé en ce qu'**une position de livraison (45) est prévue pour le dispositif de transport (20) entre l'extrémité de l'allée de desserte (14) et le rayonnage de livraison des marchandises (38).

9. Magasin selon la revendication 7 ou 8 **caractérisé en ce qu'**une position de dépôt (39) est prévue pour le rayonnage de livraison des marchandises (38) dans le prolongement d'une rangée de rayonnages mobiles (11).

10. Magasin selon l'une quelconque des revendications 7 à 9, **caractérisé en ce que** le rayonnage de livraison des marchandises (38) présente un store (43) qui ferme dans une première position le côté entrée (41) et dans une deuxième position le côté sortie (42).

11. Magasin selon les revendications 6 et 7, **caractérisé en ce que** le dispositif de réception (36) est disposé au-dessus de la position de fonctionnement du rayonnage de livraison de marchandises (38) de sorte que le manipulateur (32) libère la marchandise (60) dans le dispositif de réception (36), au-dessus du rayonnage de livraison des marchandises (38), lors du déplacement en hauteur du chariot vertical (30).
